# EUROPÄISCHE PATENTANMELDUNG

(11) **EP 1 010 515 A2**
(43) Veröffentlichungstag der Anmeldung: **21.06.2000**
(21) Anmeldenummer: 99124435.1
(22) Anmeldetag: 08.12.1999
(51) Int. Cl.: B29D 30/06, B29C 33/00

(54) **Verfahren zum Vulkanisieren von auf einen vulkanisierten Reifen-Basiskörper aufgebrachten, rohen Reifenbauteilen in einer Vulkanisationsform und Vulkanisationsform**

(30) Priorität: 14.12.1998 DE 19857482
(71) Anmelder: Continental Aktiengesellschaft, 30165 Hannover (DE)
(72) Erfinder: Neddenriep, Thomas, 29690 Schwarmstedt (DE)

(57) **Zusammenfassung**

Die Erfindung betrifft ein Verfahren zum Vulkanisieren von auf einen bereits vulkanisierten Reifen-Basiskörper aufgebrachten, rohen und einen Laufstreifen umfassenden Reifenbauteilen in einer Vulkanisationsform, die mit Formsegmenten bzw. Formteilen zum Ausformen des Profils des Laufstreifens versehen ist. Die Laufstreifenbelegung des Reifen-Basiskörpers erfolgt dabei mit einem Überschuss an Laufstreifenmaterial, wobei das überschüssige Material in der ersten Phase des Zuführens von Heizmedium, bei unterhalb des Vulkanisationsdruckes liegenden Druckverhältnissen, in Öffnungen der Vulkanisationsform abgeführt wird.

Die Vulkanisationsform gemäß der Erfindung weist Formsegmente bzw. Formteile zum Ausbilden des Profils des Laufstreifens auf. Die Formsegmente bzw. Formteile sind in jenen Bereichen, wo ein Kontakt mit dem rohen Laufstreifenmaterial erfolgt, mit Öffnungen (2), deren Querschnittsfläche an der Forminnenseite zwischen 20 und 80 mm² beträgt, versehen.

## Beschreibung

Die gegenständliche Erfindung betrifft ein Verfahren zum Vulkanisieren von auf einen bereits vulkanisierten Reifen-Basiskörper aufgebrachten, rohen und einen Laufstreifen umfassenden Reifenbauteilen in einer Vulkanisationsform, die mit Formsegementen bzw. Formteilen zum Ausformen des Profils des Laufstreifens versehen ist. Die gegenständliche Erfindung betrifft ferner eine Vulkanisationsform zum Vulkanisieren von auf einen bereits vulkanisierten Reifen-Basiskörper aufgebrachten, rohen und einen Laufstreifen umfassenden Reifenbauteilen, wobei die Form mit Formsegementen bzw. Formteilen zum Ausbilden des Profils des Laufstreifens versehen ist.

Es sind sowohl Runderneuerungsprozesse als auch Herstellungsverfahren von Neureifen, die als Radialreifen ausgeführt sind, bekannt bzw. vorgeschlagen worden, wo bereits vulkanisierte Reifen-Basiskörper - diese werden beim Runderneuerungsverfahren als Karkassen bezeichnet - mit rohen Reifenbauteilen belegt bzw. komplettiert und in einer Vulkanisationsform vulkanisiert werden. Zu diesen rohen Reifenbauteilen gehört auch der Laufstreifen, welcher beim Vulkanisieren in der Vulkanisationsform, die mit entsprechenden Stegen, Lamellen und dergleichen zum Ausformen von Nuten, Einschnitten etc. versehen ist, mit dem Profil versehen wird. Beim Runderneuerungsprozess von LKW-Reifen ist es dabei ferner üblich, neben dem Laufstreifen auch die radial äußerste Gürtellage zu erneuern.

Ein Verfahren zur Herstellung eines Radialreifens, wo vorerst ein Reifen-Basiskörper erstellt, vulkanisiert, später mit den fehlenden rohen Reifenbauteilen komplettiert und nochmals vulkanisiert wird, ist beispielsweise aus der EP-A 0 729 825 bekannt. Dabei wird im ersten Verfahrensteil der Reifen-Basiskörper schrittweise aufgebaut und zwar zumindest soweit, dass seine radial äußerste Lage zumindest eine Karkassenlage ist. Der Aufbau des Reifen-Basiskörpers kann, wie es bei der herkömmlichen Reifenfertigung der Fall ist, schrittweise erfolgen. Der Reifen-Basiskörper wird anschließend in einer Vulkanisationsform vulkanisiert und kann dann zu einem späteren Zeitpunkt fertiggestellt werden. Die Fertigstellung umfasst das Aufbringen der noch fehlenden Bauteile, insbesondere als rohe Bauteile, und ein nochmaliges Vulkanisieren des Reifens, was in einer Heizform durchgeführt wird. Bei einer bevorzugten Ausführungsform dieses bekannten Verfahrens wird der Reifen im ersten Verfahrensteil soweit fertiggestellt, dass im zweiten Verfahrensteil nur mehr der Laufstreifen zu ergänzen ist. In jedem Fall, sowohl bei der Runderneuerung als auch bei dem eben beschriebenen bekannten Verfahren, bildet der rohe Laufstreifen den Bauteil mit dem größten Volumen. Für die Gleichförmigkeit und damit den Rundlauf des entstehenden fertigen Reifens wäre es nun optimal, wenn der Reifen-Basiskörper mit soviel Material belegt wird, dass im anschließenden zweiten Vulkanisationsprozess exakt das durch die Heizform vorgegebene Volumen ausgefüllt wird. Ein Zuviel an Material hat das bereits erwähnte Problem mit Ungleichförmigkeiten des fertigen Reifens zur Folge, ein Zuwenig an Material führt während der Vulkanisation zu einer übermäßigen Beanspruchung der unterhalb des Laufstreifens liegenden Reifenbauteile, insbesondere der Radialkarkasse und der Gürtellagen.

Die Erfindung hat sich nun die Aufgabe gestellt, diesbezüglich Abhilfe zu schaffen und ein Verfahren und eine Vulkanisationsform bereitzustellen, die qualitativ hochwertige fertige Reifen gewährleisten.

Was das Verfahren betrifft, wird diese Aufgabe erfindungsgemäß dadurch gelöst, dass die Laufstreifenbelegung des Reifen-Basiskörpers mit einem Überschuss an Laufstreifenmaterial erfolgt, wobei das überschüssige Material in der ersten Phase des Zuführens von Heizmedium, bei unterhalb des Vulkanisationsdruckes liegenden Druckverhältnissen, in Öffnungen der Vulkanisationsform abgeführt wird.

Was die Vulkanisationsform betrifft, wird die gestellte Aufgabe erfindungsgemäß dadurch gelöst, dass die Formsegemente bzw. Formteile in jenen Bereichen, wo ein Kontakt mit dem rohen Laufstreifenmaterial erfolgt, mit Öffnungen, deren Querschnittsfläche an der Forminnenseite zwischen 20 und 80 mm² beträgt, versehen sind.

Das erfindungsgemäße Verfahren bzw. die erfindungsgemäß ausgeführte Vulkanisationsform gewährleisten eine Fertigstellung der Reifen zu qualitativ hochwertigen Reifen. Das vorab in überschüssiger Menge aufgebrachte Laufstreitenmaterial wird, soweit es erforderlich ist, in die Vulkanisationsform abgeführt, wobei sichergestellt ist, dass dieses Abführen im notwendigen Ausmaß stattfindet. Zu diesem Zweck wird erst dann der volle Vulkanisationsdruck eingestellt, wenn sich der Reifen in seiner Endposition in der Heizform befindet. Ein unerwünschtes, vorzeitiges Anvulkanisieren von Laufstreitenmaterial, was wieder Probleme mit der Gleichförmigkeit des entstehenden Reifens aufwerfen könnte, wird dadurch verhindert. Nachfolgend, wenn der Reifen der Vulkanisationsform entnommen worden ist, werden die entstandenen noppenartigen Austriebe mit einem geeigneten Werkzeug entfernt, insbesondere abgeschnitten.

Die Menge an Laufstreifenmaterial, die abgeführt wird, sollte in einem optimalen Bereich liegen. Es hat sich nun herausgestellt, dass der Überschuss an Laufstreifenmaterial bis zu 5 %, insbesondere im Bereich zwischen 1 und 3 %, des in der Heizform für den Laufstreifen zur Verfügung stehenden Volumens betragen sollte.

Zum Abführen des erforderlichen überschüssigen Materials werden in der Vulkanisationsform für die Öffnungen Querschnittsflächen an der Heizforminnenseite zwischen 20 und 80 mm² gewählt. Die Öffnungen werden dabei möglichst gleichmäßig in den betreffenden Bereichen der Vulkanisationsform verteilt und durchsetzen die Vulkanisationsform komplett.

Bei einer bevorzugten Ausführungsform der erfindungsgemäßen Vulkanisationsform sind diese Öffnungen als zylindrische Bohrungen ausgebildet.

Um ein möglichst ungehindertes Einfließen der rohen Laufstreifenmischung in diese Öffnungen zu gewährleisten, kann es ferner von Vorteil sein, wenn sie so gestaltet werden, dass sich ihre Querschnittsfläche über ihre Erstreckung im Forminneren vergrößert.

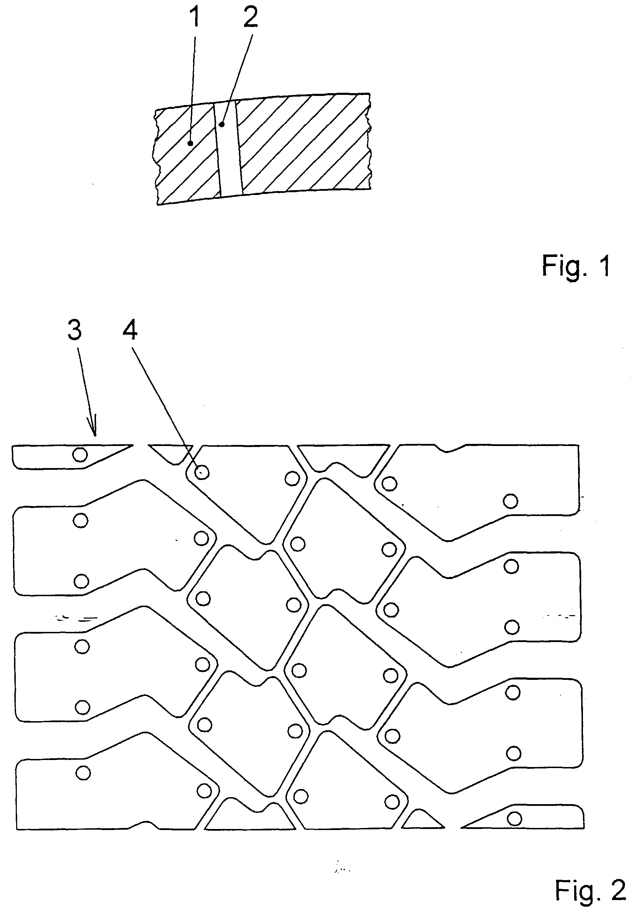

Weitere Merkmale, Vorteile und Einzelheiten der Erfindung werden nun anhand der Zeichnung, die schematisch ein Ausführungsbeispiel der Erfindung darstellt, näher beschrieben. Dabei ist in Fig.1 ein Querschnitt durch einen vergleichsweise kleinen Teil eines das Laufstreifenprofil eines Reifens ausformenden Segmentes einer Vulkanisationsform dargestellt und Fig.2 zeigt eine Draufsicht auf eine Teilabwicklung eines Laufstreifenprofiles eines in einer erfindungsgemäß ausgeführten Vulkanisationsform geheizten bzw. nach dem erfindungsgemäßen Verfahren hergestellten Fahrzeugluftreifens.

Wie bereits eingangs erwähnt, können erfindungsgemäß ausgeführte Vulkanisationsformen und auch das erfindungsgemäße Verfahren sowohl bei einem Runderneuerungsprozess als auch bei der Herstellung von Reifen, die gemäß dem aus der europäischen Patentanmeldung Nr. 0 729 825 in zwei Verfahrensteilen ablaufenden Verfahren gefertigt werden, eingesetzt werden. Sowohl beim Runderneuerungsprozess als auch bei einer der möglichen Ausführungsformen des aus der europäischen Patentanmeldung Nr. 0 729 825 bekannten Verfahrens wird ein vulkanisierter Reifen-Basiskörper - beim Runderneuerungsprozess spricht man dabei von einer Karkasse - mit rohem (unvulkanisierten) Laufstreifenmaterial belegt, welches im anschließenden Vulkanisationsprozess, der bevorzugt in einer Heizform durchgeführt wird, vulkanisiert und dabei mit der Laufstreifenprofilierung versehen wird.

Bei dem aus der EP 0 729 825 A1 bekannten Verfahren wird im ersten Verfahrensteil der Reifen-Basiskörper insbesondere schrittweise und insbesondere so, wie es bei der herkömmlichen Reifenfertigung der Fall ist, aufgebaut und anschließend in einer Vulkanisationsform vulkanisiert, die den Bauteilen, aus denen er besteht, eine Kontur und einen Querschnitt vermittelt, die bereits der gewünschten Kontur und dem gewünschten Querschnitt dieser Bauteile im fertig aufgebauten und fertiggestellten Reifen entsprechen. In einem zweiten Verfahrensteil wird der Reifen-Basiskörper mit den noch fehlenden, insbesondere rohen (unvulkanisierten) Bauteilen ergänzt und wieder in einer Vulkanisationsform vulkanisiert. Der Reifen-Basiskörper kann nun unterschiedlich komplett aufgebaut werden, so dass beispielsweise im zweiten Verfahrensteil nur noch eine Bandageein- oder mehrlagig- und der Laufstreifen oder nur noch der Laufstreifen aufzubringen sind. Beim Runderneuerungsprozess wird bei LKW-Reifen eventuell zusätzlich zum abgefahrenen Laufstreifen auch noch die oberste Gürtellage entfernt und wieder erneuert.

In beiden Fällen, sowohl beim Runderneuerungsprozess als auch im zweiten Verfahrensteil des aus der EP 0 729 825 A1 bekannten Verfahrens wird somit ein bereits vulkanisierter Reifen-Basiskörper mit rohem Laufstreifenmaterial belegt, wobei dessen Menge und somit auch dessen Dicke vorab so festgelegt sein sollten, dass im anschließenden zweiten Vulkanisationsprozess exakt das durch die Heizform vorgegebene Volumen ausgefüllt wird. Ein Zuviel an Material hat nämlich Uniformity Probleme, Ungleichförmigkeiten des fertigen Reifens, zur Folge, ein Zuwenig an Material könnte zu einer übermäßigen Beanspruchung der unterhalb des Laufstreifens liegenden Reifenbauteile, insbesondere der Radialkarkasse, führen. Vor allem bei LKW-Reifen, wo häufig Stahlkarkassen verwendet werden, ist es wünschenswert, dass die Laufstreifenbelegung sehr genau ist, um ein hohes Qualitätsniveau zu erreichen.

Gemäß der gegenständlichen Erfindung erfolgt nun die Laufstreifenbelegung mit einem Überschuss an Laufstreifenmaterial, wobei dieser Überschuss bis zu 5 %, insbesondere zwischen 1 und 3 %, der Materialmenge, die benötigt würde, um das zur Verfügung stehende Volumen in der Heizform aufzufüllen, beträgt.

Dieses Zuviel an Material wird nun, um nicht wieder die bereits oben angesprochen Probleme aufzuwerfen, abgeführt. Wie Fig.1 zeigt werden zu diesem Zweck die mit Laufstreifenmaterial in Kontakt tretenden Formteile 1 der Vulkanisationsform, die eine Runderneuerungsform oder eine Heizform zum Vulkanisieren eines gemäß des aus der EP 0 729 825 A1 bekannten Verfahrens im zweiten Verfahrensteil mit dem Luftstreifen komplettierten Reifens sein kann, mit einer Anzahl von Bohrungen 2 mit relativ großem Querschnitt versehen. Die Bohrungen 2 durchsetzen die betreffenden Formteile als insbesondere zylindrische Bohrungen, deren Durchmesser zwischen ca. 5 und ca.10 mm beträgt. Wird ein von der Kreisform abweichender Querschnitt für die Bohrungen 2 gewählt, so sollte deren Querschnittsfläche in jedem Fall der Querschnittsfläche eines Kreises entsprechen, der einen Durchmesser zwischen 5 und 10 mm aufweist. Die Querschnittsfläche an der Forminnenseite sollte daher zwischen 20 und 80 mm² betragen. Die Bohrungen 2 werden ferner, wie bereits erwähnt, bevorzugt zylindrisch, also mit konstantem Querschnitt ausgeführt. Es können jedoch auch Ausführungen für die Bohrungen 2 gewählt werden, wo der Querschnitt sich von der Forminnenseite zur Formaußenseite zu zumindest über einen Teil seiner Erstreckung vergrößert.

Die Bohrungen 2 werden möglichst gleichmäßig über jenen Bereich der Formteile 1 verteilt, wo diese in Kontakt mit Laufstreifenmaterial treten, wobei sie in jenen Bereichen der Form angeordnet werden, wo im Profil erhabene Profilbereiche, also Profilblöcke oder dergleichen, entstehen.

Überschüssige Material kann somit über die Bohrungen 2 wieder abgeführt werden. Um dieses Abführen in einem für die Gleichförmigkeit des entstehenden Reifens sicherstellenden Ausmaß zu gewährleisten, wird das Abführen in die Bohrungen 2 dann durchgeführt, wenn noch nicht der volle Vulkanisationsdruck des Heizmediums im Inneren des Reifens wirkt. Im Allgemeinen wird der Druck, unter dem dieses Abführen stattfindet, zwischen 1 und 4 bar betragen. Dadurch ist gewährleistet, dass die bereits vulkanisierte Karkasse bzw. der bereits vulkanisierte Reifen-Basiskörper sich entsprechend dem wirkenden Druck in seine Endposition in der Heizform bewegen und dabei das Überschußmaterial abführen kann, ohne dass bereits ein Anvulkanisieren desselben, was diesen Vorgang behindern könnte, stattfindet. Ist das Abführen des überschüssigen Materials in die Bohrungen 2 beendet und die Grenzschicht des frischen Materials anvulkanisiert, wird der volle Vulkanisationsdruck eingestellt, welcher bis zum Ende des Vulkanisationsprozesses aufrechterhalten wird.

Der fertige Reifen wird der Vulkanisationsform entnommen und die noppenartig abstehenden Austriebe werden mit einem geeigneten Werkzeug entfernt, insbesondere abgeschnitten.

Um das Ausmaß an Überschussmaterial bzw. eine entsprechende Anpassung der Heizform, insbesondere bezüglich des von der Heizform zur Verfügung zu stellenden Volumens, durchführen zu können; ist es günstig, vorab die diesbezüglich wesentlichen Dimensionen zu bestimmen und die Heizform entsprechend auszulegen.

Für einen vulkanisierten Reifen-Basiskörper eines bestimmten Aufbaus und einer bestimmten Dimension, wie er gemäß dem ersten Verfahrensteil des aus der EP 0 729 825 A1 bekannten Verfahrens hergestellt wird, ist die Aufßenkontur unter Innendruck bekannt bzw. es kann ohne etwa durch Anwendung von FEM (Finite-Element-Methode) errechnet werden. Parallel zu dieser Kontur bzw. in den gewünschten Abständen zu dieser Kontur wird die Innenkontur der Heizform ausgeführt, so dass sie der erwünschten Kontur des fertigen und profilierten Reifens entspricht.

Bei der Runderneuerung haben die bereits benützten Karkassen nicht alle übereinstimmende Enddurchmesser. In diesem Fall werden für Reifen einer bestimmten Dimension mehrere Heizformen zur Verfügung gestellt werden müssen. Für solche Altkarkassen kann die Außenkontur entweder durch Vermessen festgestellt werden oder auch mittels FEM errechnet werden und die passende Heizform gewählt werden.

Fig. 2 zeigt eine nicht erfindungswesentliche Aufführungsform eines Laufstreifenprofils 3 für eine LKW-Reifen mit einer typischen Blockstruktur. Dieser Reifen kann ein gemäß der gegenständlichen Erfindung erstellter runderneuerter Reifen oder ein gemäß der gegenständlichen Erfindung erstellter Neureifen sein. Zu Erkennen sind die Umrisse 4 der nachträglich abgeschnittenen "Austriebe", die durch das in die Bohrungen 2 eindringende Laufstreifenmaterial entstehen.

Erwähnt sei ferner, dass die Vulkanisation sowohl unter Verwendung eines Heizbalges als auch balglos durchgeführt werden kann. Als Heizmedium kommen sämtliche bekannten Heizmedien - Dampf, Heisswasser - in Frage.

## Patentansprüche

1. Verfahren zum Vulkanisieren von auf einen bereits vulkanisierten Reifen-Basiskörper aufgebrachten, rohen und einen Laufstreifen umfassenden Reifenbauteilen in einer Vulkanisationsform, die mit Formsegmenten bzw. Formteilen zum Ausformen des Profils des Laufstreifens versehen ist, dadurch gekennzeichnet, dass die Laufstreifenbelegung des Reifen-Basiskörpers mit einem Überschuss an Laufstreifenmaterial erfolgt, wobei das überschüssige Material in der ersten Phase des Zuführens von Heizmedium, bei unterhalb des Vulkanisationsdruckes liegenden Druckverhältnissen, in Öffnungen der Vulkanisationsform abgeführt wird.

2. Verfahren nach Anspruch 1, dadurch gekennzeichnet, dass der Reifen-Basiskörper mit einem Überschuss an Laufstreifenmaterial von bis zu 5 %, insbesondere von 1 bis 3 %, des in der Heizform für Laufstreifen zur Verfügung stehenden Volumens belegt wird

3. Verfahren nach Anspruch 1 oder 2, dadurch gekennzeichnet, dass die Öffnungen in der Vulkanisationsform an der Forminnenseite mit einer Querschnittsfläche von 20 bis 80mm² ausgeführt werden.

4. Verfahren nach einem der Ansprüche 1 bis 3, dadurch gekennzeichnet dass die Öffnungen in der Vulkanisationsform zumindest im wesentlichen gleichmäßig verteilt sind.

5. Vulkanisationsform zum Vulkanisieren von auf einen bereits vulkanisierten Reifen-Basiskörper aufgebrachten, rohen und einen Laufstreifen umfassenden Reifenbauteilen, wobei die Form mit Formsegmenten bzw. Formteilen zum Ausbilden des Profils des Laufstreifens versehen ist, dadurch gekennzeichnet, dass Formsegmente bzw. Formteile in jenen Bereichen, wo ein Kontakt mit dem rohen Laufstreifenmaterial erfolgt, mit Öffnungen, deren Querschnittsfläche an der Forminnenseite zwischen 20 und 80 mm² beträgt, versehen sind.

6. Vulkanisationsform nach einem der Anspruch 5, dadurch gekennzeichnet, dass die Öffnungen zumindest im Wesentlichen gleichmäßig verteilt sind.

7. Vulkanisationsform nach Anspruch 5 oder 6, dadurch gekennzeichnet, dass die Öffnungen die Form komplett durchsetzen.

8. Vulkanisationsform nach einem der Ansprüche 5 bis 7, dadurch gekennzeichnet, dass die Öffnungen als zumindest im wesentlichen zylindrische Bohrungen (2) ausgeführt sind.

9. Vulkanisationsform nach einem der Ansprüche 5 bis 8, dadurch gekennzeichnet, dass die Öffnungen eine sich in Richtung Forminneres vergrößernde Querschnittsfläche aufweisen.
